# EUROPEAN PATENT SPECIFICATION

(11) **EP 0 356 633 B1**
(45) Date of publication and mention of the grant of the patent: **16.03.1994**
(21) Application number: 89110581.9
(22) Date of filing: 12.06.1989
(51) Int. Cl.: C08K 5/51, C08L 71/12

(54) **Polymer material based on a high-impact polyphenylene ether mixture**
Kunststoffmaterial auf der Basis einer schlagfesten Polyphenylenethermischung
Matériau polymère à base d'une composition de poly(éthers de phénylène)résistant au choc

(30) Priority: 22.08.1988 NL 8802069
(43) Date of publication of application: 07.03.1990
(73) Proprietor: GENERAL ELECTRIC COMPANY, Schenectady, N.Y. 12151 (US)
(72) Inventor: Claesen, Christianus Adrianus Arnoldus, NL-4600 AC Bergen op Zoom (NL); Lohmeijer, Johannes Hubertus Gabriel, NL-4600 AC Bergen op Zoom (NL)
(74) Representative: Pratt, Richard Wilson

(56) References cited:
- EP-A- 0 245 207
- PATENT ABSTRACTS OF JAPAN, vol. 7, no. 61 (C-156)[1206], 15th March 1983; & JP-A-57 207 642

## Description

The invention relates to a polymer material based on a high-impact polyphenylene ether mixture which comprises 20% by weight - related to the polymer component - of a mixture of aluminium- or lithium-methyl-methyl phosphonate and a phosphate as a flame retardant.

Polyphenylene ether containing diphenyl dicresyl resorcin diphosphate is disclosed in JP-A-1982-207 642.

In so far as aluminium-methyl-methyl phosphonate is used, such mixtures are known from EP-A-0 245 207, in which the combination with phosphates is stated on page 7, first full paragraph. For the lithium salt a possible combination with other flame retardants is revealed in Applicants' non-pre-published Netherlands Patent Application 8703025.

It has been found, however, that such combinations with simple triaryl phosphates, for example, triphenyl phosphate or isopropylated and/or butylated triphenyl phosphate, still leave to be desired as regards their flame retarding effect and in addition show other undesired properties, for example, a deformation temperature which is higher than is commercially desired and furthermore side phenomena in the injection moulding process, in particular the formation of cracks and the so-called "juicing", i.e. the volatilisation and recondensation on the workpiece of a volatile component.

It has been found surprisingly that a better flame resistance is obtained with a special choice of the phosphate component, while the disadvantages mentioned hereinbefore do not occur.

The invention therefore relates to a polymer material of the type mentioned in the opening paragraph which is characterised in that the phosphate is a tetra-aryl phenylene diphosphate.

The high-impact polyphenylene ether mixture may be one of the conventional mixtures, for example, a mixture of polyphenylene ether with high-impact polystyrene or a mixture of polyphenylene ether with EPDM-rubber.

The aluminium- or lithium-methyl-methyl phosphonate is preferably present in a quantity of 2-10% by weight related to the polymer component. The tetra-aryl penylene diphosphate is preferably present in a quantity of 5-15% by weight related to the polymer component.

Tetra-aryl metaphenylene diphosphate, in particular the commercial products CR 733, cresyl-triphenyl-resorcinol diphosphate and CR 733 S, tetraphenyl-resorcinol diphosphate have proved to be particularly suitable.

The materials of the invention may moreover comprise one or more additives conventionally used for such materials, for example, fillers, reinforcing fibres, stabilisers, pigments and dyes, plasticisers, mould release agents and agents to improve the notch impact value.

The flame retardants of the invention can simply be incorporated in the basic material by mixing at any desired instant.

The invention will now be described in greater detail with reference to the ensuing specific examples. In these examples the following abbreviations are used:
- PPO® =: polyphenylene ether
- HIPS =: high-impact polystyrene
- AMMP =: aluminium-methyl-methyl phosphonate
- HDT =: deformation temperature

### EXAMPLE 1

PPO®-HIPS materials were prepared containing the commercial product CR 733 and/or AMMP described above. The compositions of these materials and the test results obtained therewith are as follows:

| Test | 1 | 2 | 3 |
|---|---|---|---|
| PPO® | 35 | 35 | 35 |
| HIPS | 65 | 65 | 65 |
| CR 733 | 18 | - | 13 |
| AMMP | - | 18 | 5 |
| HDT,°C | 82 | 129 | 96 |
| Melt viscosity (PaS) | 106 | 185 | 128 |
| UL-94, evaluation | V1 | V0 | V0 |
| "Juicing"/crack formation during injection moulding | moderate | none | none |

An HDT between 90 and 100° C is most desirable for practical purposes. The material according to the invention satisfies this desire. The material with exclusively CR 733 does not reach the V0 evaluation in the UL-94 test and gives too much juicing and crack formation; the material with exclusively AMMP is not satisfactory as regards its HDT and melt viscosity. The melt viscosity was determined at 280° C, the temperature of injection moulding, and with a shear rate of 1500 sec.⁻¹.

### EXAMPLE 2

Comparative experiments were carried out with the commercial product Reofos® 50, a mixture of triphenyl phosphate and isopropylated triphenyl phosphate. Incorporated in this test were furthermore the above-described commercial products CR 733 and CR 733 S. The composition of the various materials and the test results obtained therewith are as follows.

| Test | 4 | 5 | 6 | 7 | 8 |
|---|---|---|---|---|---|
| PPO® | 30 | 30 | 30 | 30 | 30 |
| HIPS | 70 | 70 | 70 | 70 | 70 |
| Reofos 50 | - | 15 | 10 | - | - |
| CR 733 | - | - | - | 10 | - |
| CR 733 S | - | - | - | - | 10 |
| AMMP | 15 | - | 5 | 5 | 5 |
| HDT, °C | 123 | 78 | 93 | 97 | 96 |
| Melt viscosity (PaS) | 165 | 65 | 102 | 110 | 107 |
| UL-94, evaluation | V0 | V1 | V1 | V0 | V0 |
| Average extinction time over 10 ignitions, sec. | 4 | 12 | 5 | 2 | 2.4 |
| "Juicing"/crack formation | no | yes | yes | no | no |

It will be seen immediately that good results in the UL-94 test in combination with other favourable properties are obtained with the two materials of the invention. The only other test in which the UL-94 evaluation reached V0 is that with exclusively AMMP, but then HDT and melt viscosity are not satisfactory.

## Claims

1. A polymer material based on a high-impact polyphenylene ether mixture which comprises 5-20% by weight - related to the polymer component - of a mixture of aluminium- or lithium-methyl-methyl phosphonate and a phosphate as a flame retardant, characterised in that the phosphate is a tetra-aryl phenylene diphosphate.

2. A polymer material as claimed in Claim 1, characterised in that the polyphenylene ether mixture is a mixture comprising high-impact polystyrene.

3. A polymer material as claimed in Claim 1, characterised in that the polyphenylene ether mixture is a mixture comprising EPDM-rubber.

4. A polymer material as claimed in Claims 1-3, characterised in that the aluminium- or lithium-methyl-methyl phosphonate is present in a quantity of 2-10% by weight related to the polymer component.

5. A polymer material as claimed in Claims 1-4, characterised in that the tetra-aryl phenylene phosphate is present in a quantity of 5-15% by weight related to the polymer component.

6. A polymer material as claimed in Claims 1-5, characterised in that the tetra-aryl phenylene diphosphate is a tetra-aryl metaphenylene diphosphate.

## Patentansprüche

1. Polymermaterial basierend auf einer hochschlagfesten Polyphenylenäthermischung, die 5 - 20 Gew.-%, bezogen auf die Polymerkomponente, einer Mischung aus Aluminium- oder Lithium-Methyl-Methylphosphonat und einem Phosphat als flammhemmenden Mittel enthält, dadurch gekennzeichnet, daß das Phosphat ein Tetra-Aryl-Phenylendiphosphat ist.

2. Polymermaterial nach Anspruch 1, dadurch gekennzeichnet, daß die Polyphenylenäthermischung eine Mischung ist, die hochschlagfestes Polystyrol enthält.

3. Polymermaterial nach Anspruch 1, dadurch gekennzeichnet, daß die Polyphenylenäthermischung eine Mischung ist, die EPDM-Gummi enthält.

4. Polymermaterial nach den Ansprüchen 1 bis 3, dadurch gekennzeichnet, daß das Aluminium- oder Lithium-Methyl-Methylphosphonat in einer Menge von 2 - 10 Gew.-%, bezogen auf die Polymerkomponente, vorhanden ist.

5. Polymermaterial nach den Ansprüchen 1 bis 4, dadurch gekennzeichnet, daß das Tetra-Aryl-Phenylenphosphat in einer Menge von 5 - 15 Gew.-%, bezogen auf die Polymerkomponente, vorhanden ist.

6. Polymermaterial nach den Ansprüchen 1 bis 5, dadurch gekennzeichnet, daß das Tetra-Aryl-Phenylendiphosphat ein Tetra-Aryl-Metaphenylendiphosphat ist.

## Revendications

1. Matériau polymère à base d'un mélange de polyoxyphénylène à haute résistance aux chocs qui comprend 5 à 20% en poids par rapport au polymère d'un mélange de méthylphosphonate de méthyle et d'aluminium ou de lithium et d'un phosphate, à titre de retardateur d'inflammation, caractérisé en ce que le phosphate est un phénylènediphosphate de tétra-aryle.

2. Matériau polymère selon la revendication 1, caractérisé en ce que le mélange de polyoxyphénylène est un mélange comportant un polystyrène à haute résistance aux chocs.

3. Matériau polymère selon la revendication 1, caractérisé en ce que le mélange de polyoxyphénylène est un mélange comportant du caoutchouc EPDM.

4. Matériau polymère selon l'une des revendications 1 à 3, caractérisé en ce que le méthylphosphonate de méthyle et d'aluminium ou de lithium est présent en une quantité valant de 2 à 10% en poids par rapport au composant polymère.

5. Matériau polymère selon l'une des revendications 1 à 4, caractérisé en ce que le phénylènediphosphate de tétra-aryle est présent en une quantité valant de 5 à 15% en poids par rapport au composant polymère.

6. Matériau polymère selon l'une des revendications 1 à 5, caractérisé en ce que le phénylènediphosphate de tétra-aryle est un méthaphénylènediphosphate de tétra-aryle.
